# EUROPEAN PATENT APPLICATION

(11) **EP 1 677 194 A1**
(43) Date of publication of application: **05.07.2006**
(21) Application number: 04030923.9
(22) Date of filing: 28.12.2004
(51) Int. Cl.: G06F 11/20

(54) **Backup method and system for operation and maintenance centers of a telecommunication system using storage based activity detection**

(71) Applicant: SIEMENS AKTIENGESELLSCHAFT, 80333 München (DE)
(72) Inventor: Baum, Michael, Dr., 12437 Berlin (DE)

(57) **Abstract**

For a reliable control of the activity of two operation and maintenance centers for the same telecommunications network the invention suggests: a method for controlling the activity of a first process of a first operation and maintenance center (OMC1) of a telecommunication network and of a second process of a second operation and maintenance center (OMC2) of the telecommunication network,
one process being a backup process for the other process wherein, when the first process is active and the second process is inactive, the first process regularly sends messages representing its activity status to devices in predetermined time intervals,
and the devices respectively store received messages,
and the second process tries to read stored messages from the devices,
wherein only if the second operation and maintenance center can contact at least one device and if the second process finds a stored message of the first process on at least one device, which's message is younger than the time interval, then the inactive second process turns active,
wherein the active first process only turns inactive, if it did not leave a message on a device or if it did not reach any device.

## Description

Principle for redundancy of TMN applications to get improved availability using multi surface systems

US 2002/0095489 A1 discloses a stand-by host group system. Mobile telecommunications systems as such are known to one skilled in the art e.g. from the GSM network (see e.g. www.etsi.com) or 3^{rd} generation networks (see e.g. www.3GPP.com) or other networks.
Such telecommunication networks can comprise operation and maintenance centers OMC which can control and monitor the operation of an entire telecommunication network or of sections of a telecommunication network. As an operation and maintenance center is an important functionality of a mobile telecommunication network it can be implemented twice with one active operation maintenance center and a second operation maintenance center which is in a stand-by mode during operation of the first operation and maintenance center.

An object of the invention is to provide an efficient and highly reliable coordination of the activities of operation and maintenance centers in a telecommunication network. The object is achieved by the invention said forth in the claims.

The invention provides a highly reliable coordination of the activity of (always only one of) two or more operation and maintenance centers both able to control a mobile network or sections of such mobile network. According to the inventions a process of one operation and maintenance center can regularly send activity indicating messages to devices as e.g. servers, whereas a process on the second (backup) operation and maintenance center can regularly try to read such messages from the devices (servers etc.). If these messages are sent in regular time intervals from the process of the first operation and maintenance center and are also read out in time intervals which are not longer than this time interval or which are the same as the named time interval and the second operation and maintenance center can highly reliably detect whether the first operation maintenance center is active which allows the second operation and maintenance center to be always active if the first operation and maintenance center is not active but not in other cases.
Preferably there are at least two devices to which the said messages are sent and from which they are read out to guarantee high reliability of the coordination of the two operation and maintenance centers independently from the reliability of the server devices receiving and providing the messages. E.g. there can also be more than two devices as e.g. 3, 4, 5 or even more server devices.

Further advantages are obvious from the claims and the following description of an example of an implementation of the invention in the description and the enclosed drawing.

In the drawing,
Fig. 1 shows two operation and maintenance centers exchanging activity messages ("heartbeat messages")
Fig. 2 shows transitions of the activity statuses of the two operation and maintenance centers
Fig. 3 shows an implementation of activity message transfer via devices
Fig. 4 shows the activity message time limit ("heartbeat schedule")
Fig. 5 explains state transitions
Fig. 6 explains two time scales
Fig. 7 explains the case of no fail/over
Fig. 8 explains the case of a late failover

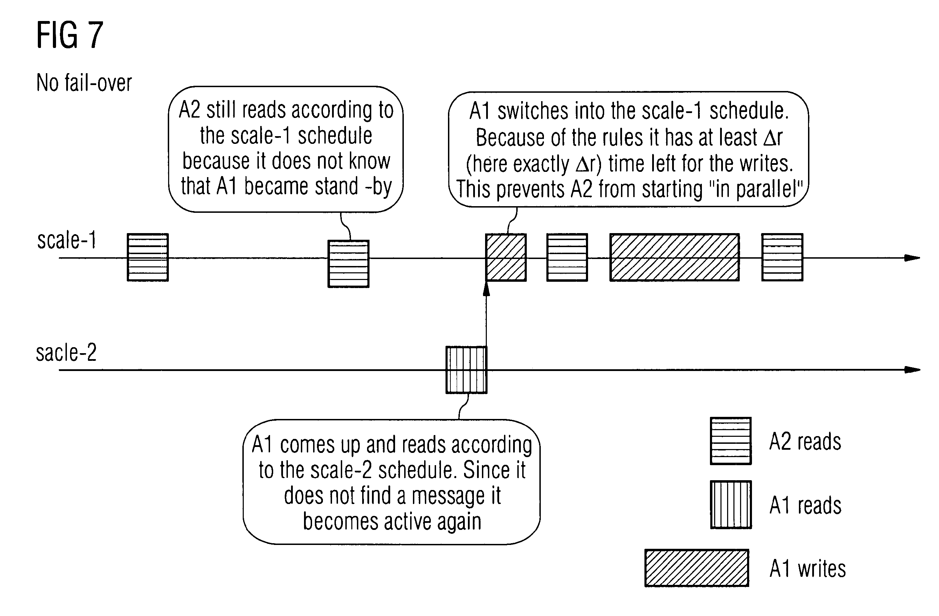

Figures 7 to 9 explain the probability of certain cases

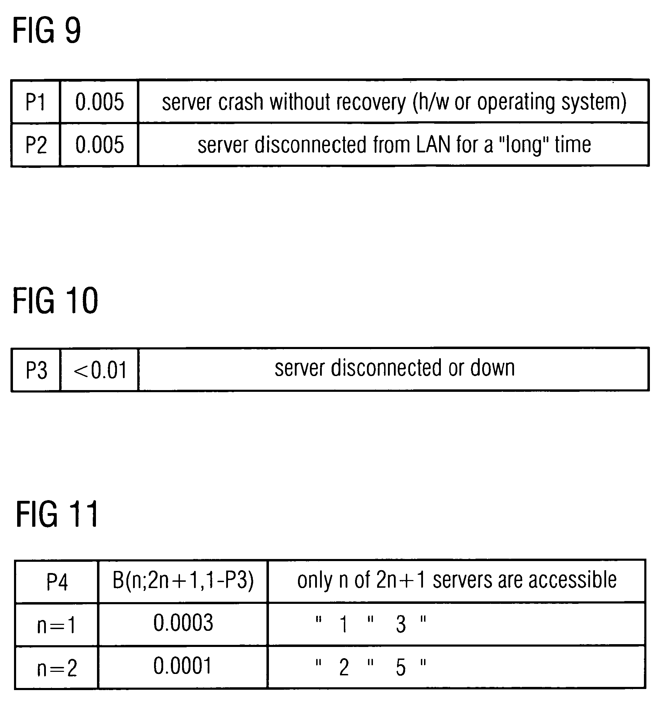

Fig. 10 explains status transitions

The invention provides an automatic fail-over procedure for pairs of TMN applications.

Let A1 be an application, or a group of applications, or a part of an application which can work independently from other parts. Usually A1 will be a process.

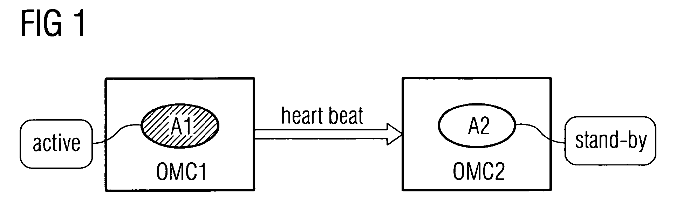

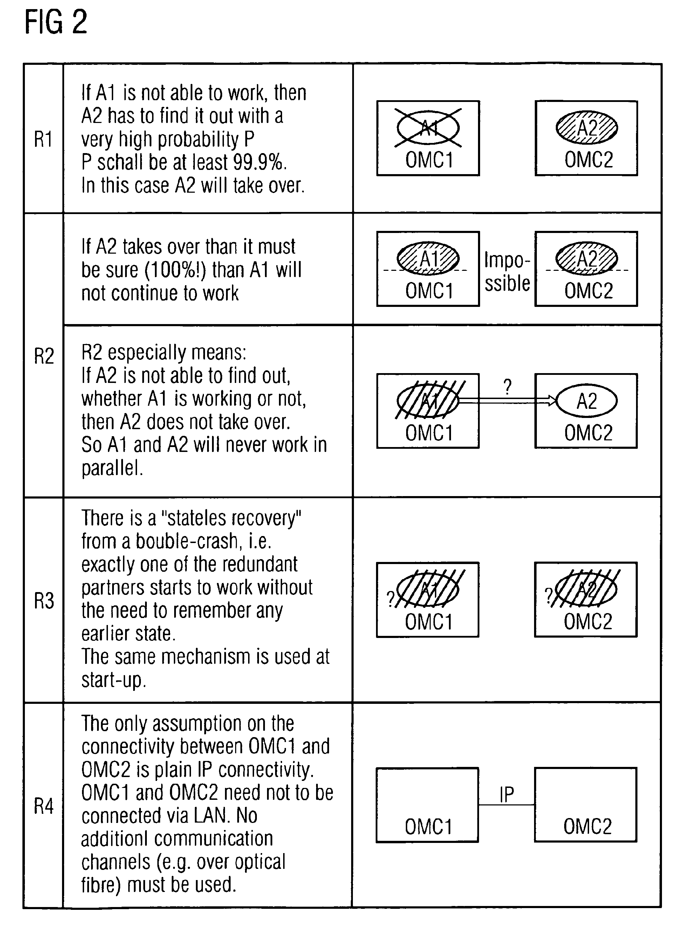

E.g. A1 runs in the Operation- and Maintenance Centre OMC1 and A2 is its redundant partner in OMC2 according to Fig.1. Fig. 2 suggests requirements for this situation.

Instead of using one highly reliable communication channel for the heart-beat the invention suggests several lower reliable channels across different servers. High reliability can thus be reached statistically.

Stateless recovery from double-crash will be reached by a defined read-write time scale.

### Description of the inventive procedure/mechanism:

The invention suggests one type of message which is a sign of live (which might also be called "heartbeat message"or "message"). More precisely the message means that a process (A1 etc) of an OMC is alive (= functioning) and it is going to continue its work (A1 could also be alive but could decide that it is not able to continue successfully.)

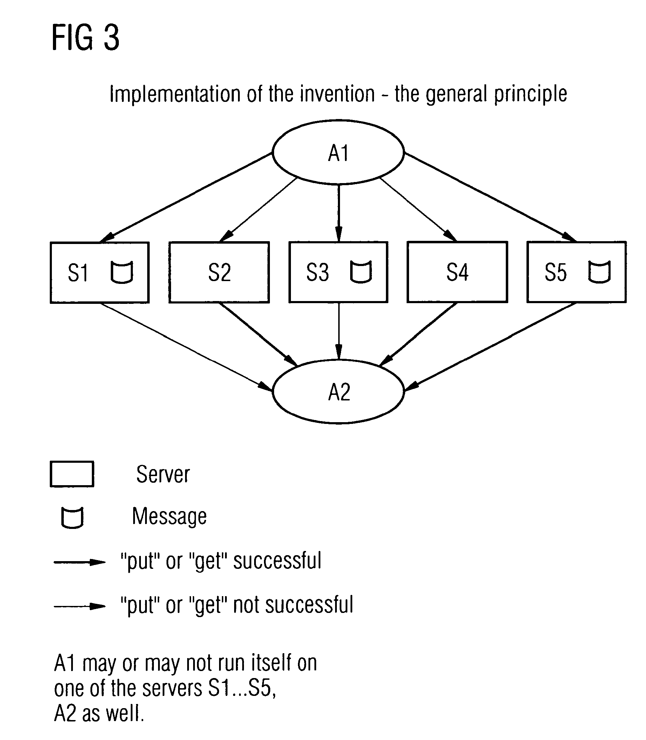

Next the general inventive method and mechanism are described referring to fig. 3:
1. If process A1 is up (active) and decides (by means of certain criteria), that it probably will be able to fulfil its job, then it tries to deposit a message on n+1 servers (named devices in the claims) of OMC1 and/or OMC2. It's no matter on which n+1 servers of the 2n+1 servers A1 succeeds (regarding depositing a message).
   In the above figure is n = 2, process A1 succeeds in depositing a message on n+1 = 3 servers, here: S1, S3, S5.
   Process A2 is able to access n+1 = 3 servers, here: S2, S4, S5. It is guaranteed that in this case A2 will find a message on at least one server, here: S5.
   "A2 is able to access a server" actually means:
   Process A2 is able to decide whether there is a message on the server or not. But for simplicity this will be named "A2 is able to access".
2. If process A1 is not able to deposit the message on n+1 servers, then it stops working (if not already stopped).
3. If process A1 stops working then it assumes that process A2 takes over, regardless whether process A2 really becomes active or not. Therefore from now on process A1 expects messages from process A2.
4. Process A2 takes over if and only if it is able to access n+1 servers but does not find a message.

Remark 1: If process A2 is active then it may (or even should) use some other servers to deposit its messages than process A1.
Remark 2 : From an algorithmic point of view it makes no difference whether A1 deposits a messages on exactly n+1 servers or on more than n+1 servers. From a performance point of view A1 should not try to deposit the messages on more than n+1 servers. In the long-term this rule leads to more get-attempts by A2, but A2 is stand-by and has "nothing" to do.
Remark 3: Point 2 of the algorithm says "If process A1 is not able to deposit the message on n+1 servers, then it stops working (if not already stopped)."
   Here is a refinement: If A1 has deposited messages on k servers, k < n+1, and it decides to stop because it is not able to access n+1 servers (or by any other reason), then it should try to delete the k messages.
   The algorithm would work without this refinement as well (therefore it is no tragedy if a deletion fails). But it increases the probability that A2 takes over already after its next read.

The messages are put / read at certain intervals □t, e.g. □t = 7 minutes.
The "read" is scheduled a certain time span before the next put.

Therefore both OMCs should have the same time (synchronized clocks etc). Means: The time should e.g. not differ more than 20 seconds.

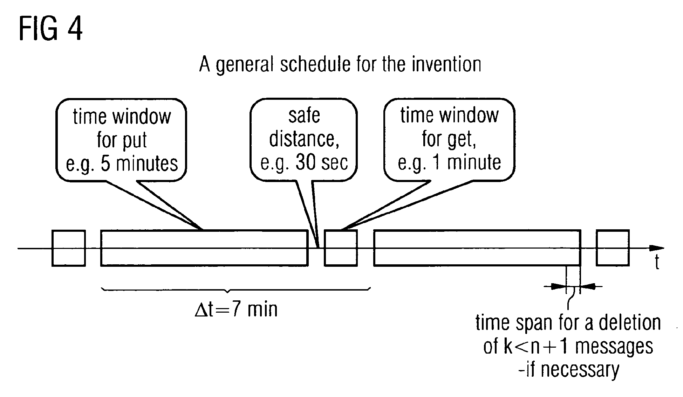

E.g. in figure 4 the "read" is scheduled to 1 minute and 30 seconds before the next put.
To give process A1 such a large time window for the put avoids unnecessary fail-over-s.
It gives A1 the chance to recover from a restart, or the working conditions for A1 improve during the put-time-window. The generous get-time-window of one minute could be used to repeat failed get-s.

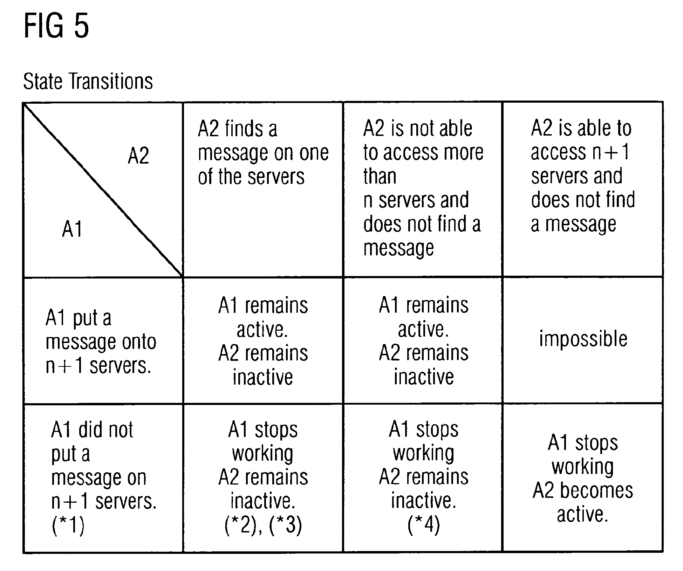

The table in Fig. 5 describes the possible state transitions of A1 and A2.
In Fig. 5 the references (*1), (*2) and (*3) mean:
(*1) Possible reasons:
   - A1 is down
      - A1 is up but is not able to put messages on n+1 servers
      - A1 is up but does not want to put messages, i.e. it wants to stop "voluntarily"
(*2) Obviously this transition can happen only once, namely if A1 was not able to delete all of the already deposited messages. But in the next cycle A1 will not write any message. Therefore we do not need to examine this transition in more detail.
(*3) "A1 stops working" includes that it has already stopped, e.g. because of a crash.
   Anyway: If A1 remains alive or comes up again, than it assumes that A2 became active.
   A1 and A2 work stateless! If an application of a redundant pair comes up it always assumes that its partner is active. As we will see below exactly one of them automatically becomes active, i.e. there is no need for any additional handling.
(*4) This is the bad case: A1 stops but A2 remains inactive - possibly lasting.

How does such an (unlikely) situation come to an end? There are several possibilities:
(1) A1 assumes that A2 has become active. Therefore from now on - may be after a recovery - A1 looks for messages deposited by A2. Because it will not find a message it will become active again.
(2) Finally A2 is able to access n+1 servers and becomes active.
(3) Worst case: A1 does not recover and A2 is permanently not able to access n+1 servers. This could happen e.g. if OMC1 crashes completely.
   (1) Then A2 must be told manually that it should become active.

It happen that the transitions (1) and (2) happen approximately at the same time, so A1 and A2 both become active - if the following additional rules were not introduced with respect to the timing.

### Let be

□t the length of one sign-of-life cycle,
□w the length of a write period,
Or the length of a read period.

### Rules:

1. After a fail-over the write-read schedule should remain the same but out of phase
   (i.e.: same rhythm but shifted start points).
2. The phase displacement should be □t/2,
   i.e. the write periods of A2 start □t/2 after the write periods of A1
3. It must be □w >= 3*□r
4. An applications changes its state from "stand-by" to "active" exactly at the end of a read phase (in which it was able to access n+1 servers but did not find a message). The phase displacement of □t/2 takes place immediately.

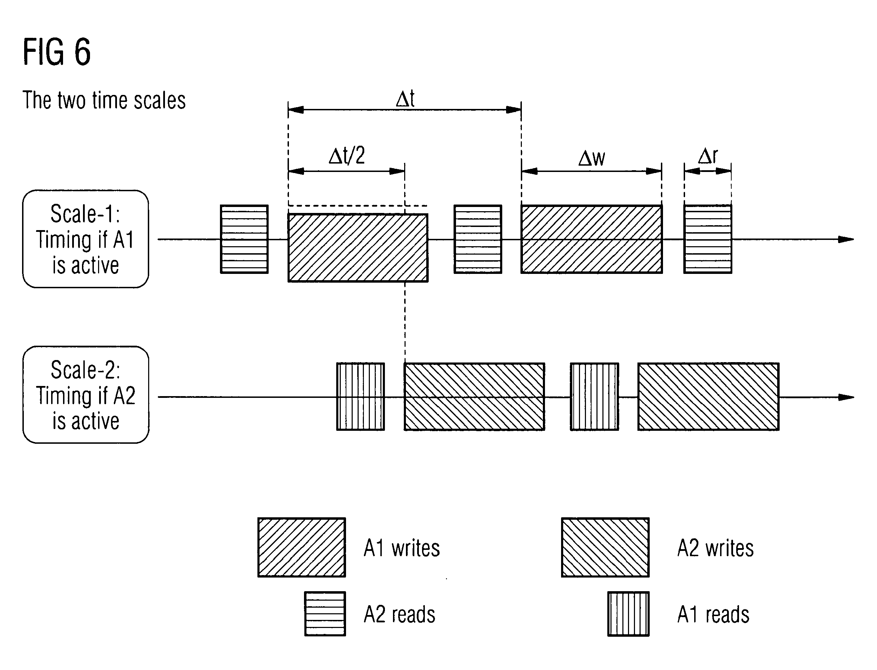

In the figure 6 e.g.: □w = 3*□r.

Now, it is assumed that A1 stopped working but A2 does not become active. A1 uses Scale-2 and A2 uses Scale-1.
If A1 once more becomes active, then the situation is as depicted in fig. 7.

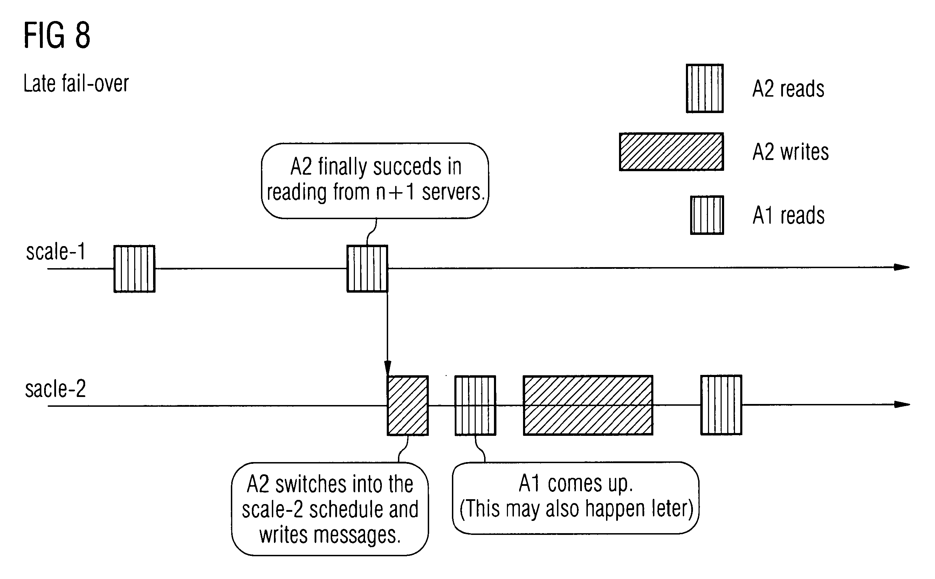

And now the opposite event (A2 "wins") is described referring to fig.8.

The algorithm did not yet consider the case that A1 and A2 can run in parallel. However his can happen, because the algorithm is based on the assumption that OMC1 and OMC2 have (almost) the same time. A misfortune could invalidate this assumption.

Therefore:
If an application is active, then it writes in "its" time scale.

Additionally it shall read in the complementary time scale . If it finds a message from its partner, then it should raise an alarm stop working.

Repeating explicitely the behaviour at start-up:
- Both redundant partners start without any additional parameters like "you should become the active one"
- Both partners will begin with the assumption that their partner is active.
   One of them will be the first which notices, that there is no message from the partner. And it will become active.
   Our timing rules prevent that the partner becomes active at the same time.

The invention provides a highly reliable fail-over procedure without the need of any special hardware only by using inherent functionality.

The basic probabilities acc. To fig.7 are assumed.

Then the probability, that the server it disconnected is, acc. to fig. 10, less than P1+P2, because we have to consider that both things could happen at the same time.

Then (s. fig. 11) the probability P4 that only n of 2n+1 servers are accessible is the Bernoulli distribution B(n;2n+1,1-P3). In Excel this looks like BINOMVERT(n,2n+1,1-P3,TRUE). Search for the keyword "binom" in Excels help to see a definition of B or BINOMVERT.

| P4 | B(n;2n+1,1-P3) | only n of 2n+1 servers are accessible | |
|---|---|---|---|
| n=1 | 0.0003 | " 1 " 3 " | |
| n=2 | 0.0001 | " 2 " 5 " | |

2. Stateless recovery / startup
3. The OMCs need not to be in one and the same LAN. So they may be - lets say - 1000 km apart from each other.

E.g. the choice is:
put message = create a file,
read message = find a file.

- On the local disks of the 2n+1 servers there is a defined sub-directory SUBDIR_{A1} which is used by A1 to deposit its messages.
   The subdirs on the servers S1, S2, ...are denoted by SUBDIR_{A1} (S1), SUBDIR_{A1}(S2),...
- To put a message onto S1 simply means to create an (empty) file in SUBDIR_{A1}(S1).
- A2 opens and reads the directory SUBDIR_{A1}(S1).
   If it finds a file with the right file creation time¹ then A2 has received the message.
   A2 is able to decide whether there is a message on S1 (we said "is able to access S1") if a readdir() succeeds.

If process A2 is active then it uses subdirs SUBDIR_{A2} which are different from SUBDIR_{A1}.
Remember that also the servers need not to be same.
¹ "right file creation time": not older than At.

Remark: We say intentionally nothing about the implementation of the remote createfile() and readdir(). It may be accomplished by exported directories (shared network drives), ftp (put, ls) or somehow else.
We also say nothing about all the necessary things like clean up.

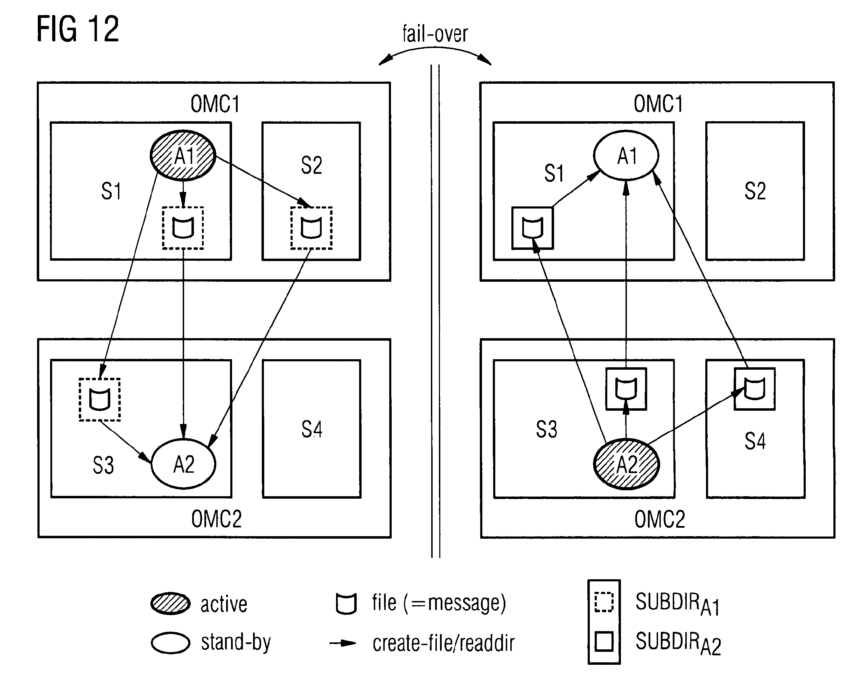

### Example (Fig. 12):

So A1 is a process on server S1 in OMC1 and A2 is a process on S2 of OMC2.
We choose n=1.
If A1 is active it deposits its messages on S1, S2, S3.
If A2 is active it deposits its messages on S1, S3, S4.
If A1 is active it periodically tries to create a file in SUBDIR_{A1} on 2 servers.
One minute later A2 tries to read SUBDIR_{A1} from 2 servers.

If A2 is active it periodically tries to create a file in SUBDIR_{A2} on 2 servers.
A1 tries to read SUBDIR_{A2} from 2 servers.

Remark: If A1 (or A2) writes a message it could contain the current time of OMC1 (or OMC2).
If A1 is active and finds an unexpected message from A2 it can compare the file creation time with the time written into the file. The difference of both times could be included into an alarm which A1 is going to send.

## Claims

1. Method for controlling the activity of a first process (A1) of a first operation and maintenance center (OMC1) of a telecommunication network and of a second process (A2) of a second operation and maintenance center (OMC2) of the telecommunication network,
one process (A2) being a backup process for the other process (A1),
wherein, when the first process (A1) is active and the second process (A2) is inactive, the first process (A1) regularly sends messages representing its activity status to devices (S1, S2, S3) in predetermined time intervals(Δt),
and the devices respectively store received messages,
and the second process tries to read stored messages from the devices,
wherein only if the second operation and maintenance center (OMC2) is able to contact at least one device and if the second process does not find a stored message of the first process on at least one device, which message is younger than the time interval, then the inactive second process turns active.

2. Method according to claim 1,
**characterized in that that** the telecommunication network is a mobile telecommunication network, especially a cellular mobile telecommunication network.

3. Method according to one of the preceding claims,
**characterized in that** the said devices are servers, especially servers of a telecommunication network.

4. Method according to one of the preceding claims,
**characterized in that** the first and second process are operation and/or maintenance processes for the telecommunication network.

5. Method according to one of the preceding claims,
**characterized in that** an active status means carrying out an activity beyond reading the messages.

6. Method according to one of the preceding claims,
**characterized in that** an active status comprises doing an operation and/or maintenance process for the telecommunication network and an inactive status comprises not doing such processes.

7. Operation and maintenance system for a telecommunication network, especially a cellular mobile telecommunication network,
- comprising a first operation and maintenance center (OMC1) on which a first process is implemented and
- comprising a second operation and maintenance center (OMC2) on which a second process is implemented
- comprising a plurality of devices with a receiving means for receiving messages from the first process and with storing means for storing received messages and with sending means for sending stored messages for the second process if the second process tries to read the messages,
- comprising triggering means for making the first process send messages to the devices in predetermined time intervals,
- comprising triggering means for making the second process try to read stored messages from the devices,
- comprising activation means for activating the second process if it cannot find a message on any device,
- comprising a deactivation means for deactivating the first process if it does not or cannot send messages for a longer time than the time interval to at least one device.
